# EUROPEAN PATENT SPECIFICATION

(11) **EP 2 487 736 B1**
(45) Date of publication and mention of the grant of the patent: **27.04.2016**
(21) Application number: 12155207.9
(22) Date of filing: 13.02.2012
(51) Int. Cl.: H01M 2/10, H01M 2/30, H01M 10/46

(54) **Batteries for power tools and methods of mounting battery terminals to battery housings**
Batterien für Elektrowerkzeuge und Verfahren zum Montieren von Batteriepole in einem Batteriegehäuse
Batteries pour outils électriques et procédés d'assemblage de bornes de batteries dans des boîtiers de batterie

(30) Priority: 14.02.2011 JP 2011028298
(43) Date of publication of application: 15.08.2012
(73) Proprietor: Makita Corporation, Anjo, Aichi 446-8502 (JP)
(72) Inventor: Ogura, Hironori, Anjo, Aichi 446-8502 (JP); Taga, Hideyuki, Anjo, Aichi 446-8502 (JP); Hayashi, Hidekazu, Anjo, Aichi 446-8502 (JP)
(74) Representative: Kramer Barske Schmidtchen Patentanwälte PartG mbB

(56) References cited:
- JP-A- 5 325 941
- JP-A- 7 320 716
- JP-A- 2006 128 009
- JP-A- 2009 104 793
- US-A1- 2002 142 195
- US-A1- 2008 152 994

## Description

The present invention relates to batteries for power tools, and in particular to batteries that can be connected to power tools for use as power sources of the power sources and can be connected to battery chargers for the purpose of recharging. The present invention also relates to methods of mounting battery terminals to battery housings of the batteries.

JP 5 325 941 A discloses a sealed lead-acid battery. US 2002/142 195 A1 and US 2008/152 994 A1 disclose a battery pack, respectively.

A known battery is disclosed, for example, in Japanese Laid-Open Patent Publication No. 2001-143678. As shown in FIG. 11, a battery of this publication includes a lid 110 that is a part of a battery housing. A pair of right and left guide slits 112 are formed in the lid 110 and extend in a forward and rearward direction. The guide slits 112 are configured such that plate-like terminals of a power tool or a battery charger (not shown) can be inserted into the guide slits 112 from the front side as the power tool or the battery charger is connected to the battery. A positive electrode 113 and a negative electrode 114 are connected to an electric circuit board (not shown) and are positioned on the inner side of the guide slits 112 (i.e., the inner side of the lid 110). The positive and negative electrodes 113 and 114 can be connected to the terminals of the power tool or the battery charger. A signal guide slit 117 and a connector opening 116 are formed in the lid 110 at positions between the guide slits 112. A signal electrode 115 connected to the electric circuit board is positioned on the inner side of the signal guide slit 117. The signal electrode 115 can be connected to a signal terminal of the power tool or the battery charger. A connector 119 is connected to the electric circuit board and extends outward through the connector opening 116. The connector 119 is bent to be oriented forwardly for connection with a connector (not shown) of the battery charger.

In the battery of the above publication, the positive electrode 113, the negative electrode 114, etc., are positioned between the guide slits 112 formed in the lid 110, and the connector 119 protrudes outwardly through the opening 16. Therefore, when the tool battery is wetted with water, it may be possible that the water may enter inside of the battery housing through the guide slits 112, the connector opening 116, etc.

Therefore, there has been a need in the art for a battery having a waterproof property.

According to the present teachings, a battery includes a battery housing and a plurality of battery terminals. The battery housing has a terminal mounting portion made of resin. The battery terminals are connectible with external terminals and are mounted to the terminal mounting portion so as to extend through the terminal mounting portion, so that each of the battery terminals has a first end positioned outside of the battery housing and a second end positioned inside of the battery housing. At least one of the battery terminals is integrated with the terminal mounting portion, so that there is no substantial clearance between the at least one of the battery terminals and a part of the terminal mounting portion, through which the at least one of the battery terminals extends.

Additional objects, features, and advantages will be readily understood after reading the following detailed description together with the claims and the accompanying drawings, in which:
FIG 1 is a perspective view as viewed from an upper side of a battery for a power tool according to a first example;
FIG. 2 is a plan view of the battery;
FIG. 3 is a vertical sectional view of the battery taken along line III-III in FIG. 2;
FIG 4 is a vertical sectional view of the battery taken along line IV-IV in FIG. 2;
FIG 5 is a perspective view of a lid of a battery housing of the battery as viewed from inside of the battery housing;
FIG. 6 is a perspective view of the lid similar to FIG 5 but showing the state where an electric circuit board is mounted to an inner surface of the lid;
FIG. 7 is a schematic vertical sectional view showing a mounting structure for mounting the electric circuit board to the lid;
FIG. 8 is a schematic vertical sectional view similar to FIG. 7 but showing a mounting structure for mounting the electric circuit board to the lid according to a second example;
FIG. 9 is a schematic vertical sectional view similar to FIG. 7 but showing a mounting structure for mounting the electric circuit board to the lid according to a third example;
FIG. 10 is a schematic vertical sectional view similar to FIG. 7 but showing a mounting structure for mounting the electric circuit board to the lid according to a fourth example; and

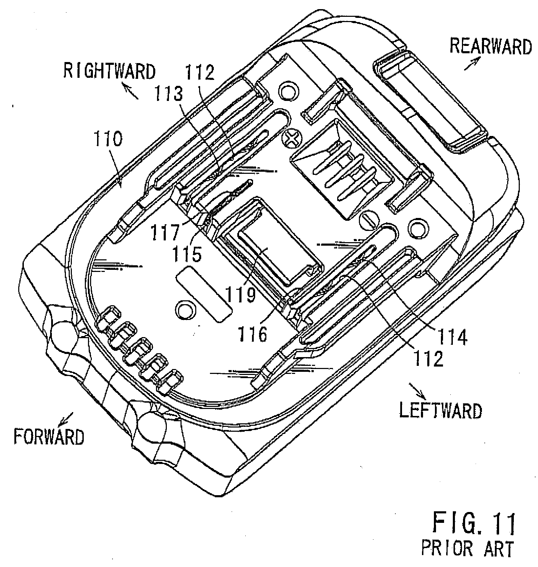

FIG. 11 is a perspective view as viewed from an upper side of a lid of a known battery.

In one example, a battery for a power tool is connectible with the power tool for serving as a power source for driving the power tool and is also connectible with a battery charger for recharging the battery. The battery includes a battery housing made of resin and a plurality of battery terminals extending from an outside of the battery housing into inside of the battery housing through the battery housing. The battery terminals are connectible with terminals of the power tool or terminals of the battery charger. At least one of the battery terminals is integrated with the battery housing by an insertion molding technique.

Because the at least one of the battery terminals is integrated with the battery housing by an insertion molding technique, there is no substantial clearance between the at least one battery terminal and a portion of the battery housing, through which the at least one battery terminal extend. Therefore, water may not enter inside of the battery housing from the portion of the battery housing, through which the at least one battery terminal extends.

In addition, it is not necessary to provide a seal member between the at least one battery terminal and the portion of the battery housing, through which the at least one battery terminal extends. As a result, the waterproof property can be improved without increase of the manufacturing cost.

The at least one battery terminal may include discharge or charge terminals and signal terminals.

The battery further includes an electric circuit board mounted to an inner surface of the battery housing so as to be connectible with the battery terminals. With this arrangement, it is possible to eliminate electric wires for connecting between the battery terminals and the electric circuit board.

The battery may further include a seal member provided between the electric circuit board and the battery housing and surrounding electronic components mounted to the electric circuit board. Therefore, it is possible to prevent the electric circuit board from being wetted with water.

The battery may further include a wall extending from the inner surface of the battery housing and surrounding the electric circuit board. A filling material having a waterproof property may be filled into a space inside of the wall, so that at least a part of the electric circuit board is embedded within the filling material. With this arrangement, it is possible to further reliably prevent the electric circuit board from being wetted. In addition, it is possible to improve the mounting strength of the electric circuit board to the battery housing.

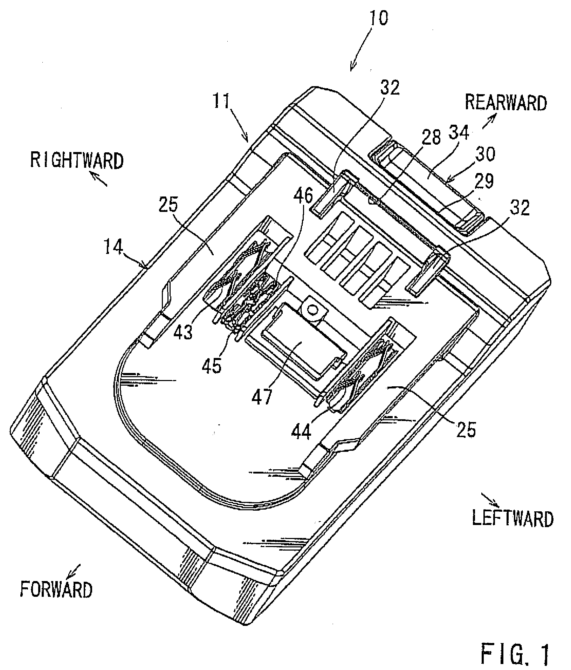

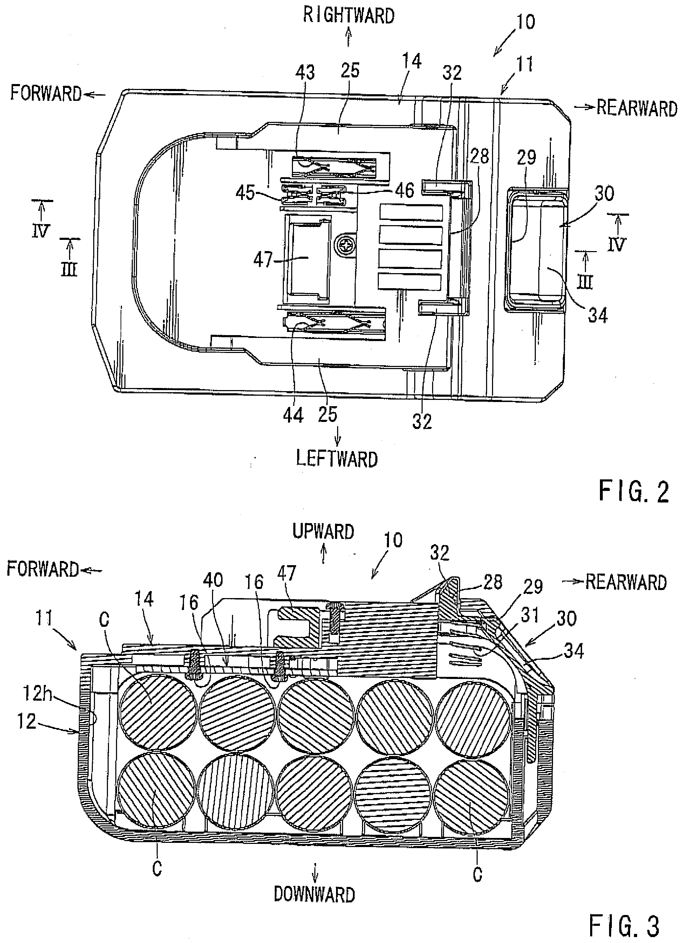

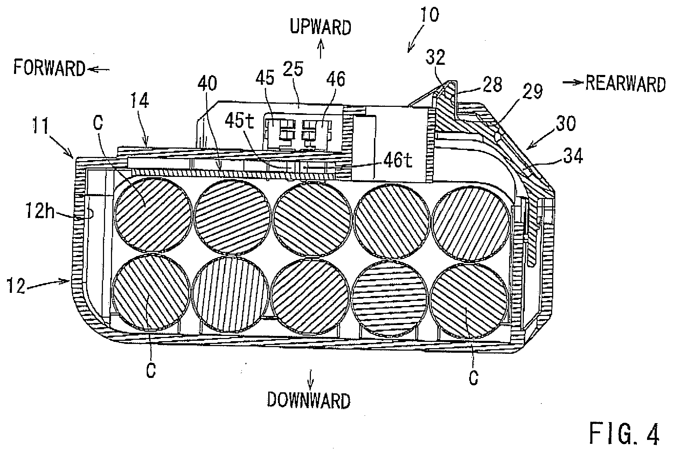

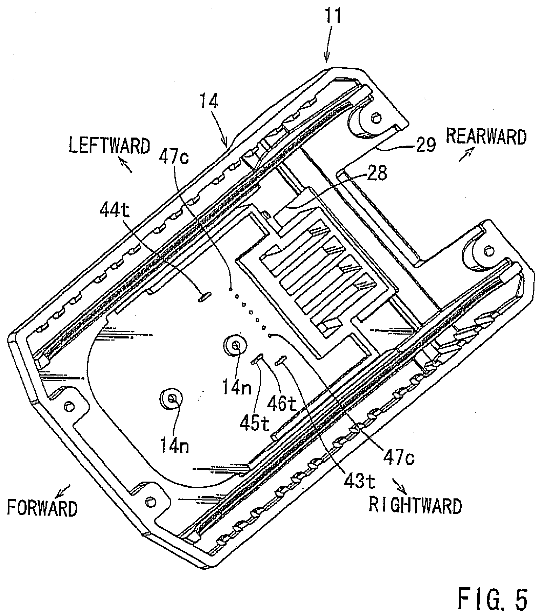

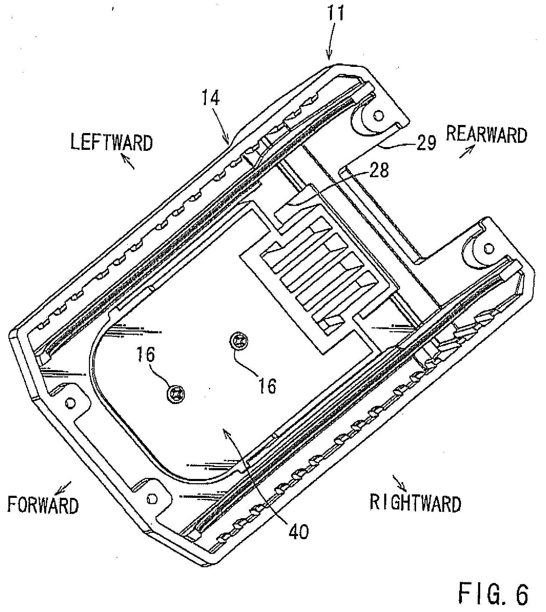

A battery according to a first example will now be described with reference to FIGS. 1 to 7. Referring to FIGS. 1 to 3, a battery 10 has a battery housing 11 defining a storage space for storing a plurality of cylindrical battery cells C. In this example, ten battery cells C are stored within the battery housing 11. The battery housing 11 includes a housing body 12 and a lid 14. The housing body 12 has an upper opening 12h (see FIG. 3) that is closed by the lid 14. Each of the housing body 12 and the lid 14 has a substantially rectangular configuration in plan view. The peripheral portion of the lid 14 (see FIG. 5) is fixed to the housing body 12 at four positions by means of screws (not shown).

The battery cells C are arranged such that their axes are parallel to the right and left direction (i.e., the widthwise direction) of the battery housing 11. More specifically, two sets of five battery cells C arranged in the forward and reward direction are vertically tiered. An electric circuit board 40 having an electric circuit (not shown) for performing a discharge control and a charge control of the battery cells C is positioned above the battery cells C.

As shown in FIG. 3, a hook member 30 having a slide lock function is disposed within the rear portion of the battery housing 11 and is biased upward by a coil spring 31, so that a pair of lock claws 32 disposed at an upper portion of the hook member 30 protrude upward from the battery housing 11. When the power tool or the battery charger has been slid on and connected to the battery 10, the lock claws 32 of the hook member 30 may engage a portion of a power tool or a battery charger (not shown) so as to prevent the power tool or the battery charge from sliding relative to the battery 10 and to hold the connecting condition between the battery 10 and the power tool or the battery charger. The lock claws 32 may be disengaged from the power tool or the battery charger when the operator pushes the hook member 30 downward against the biasing force of the coil spring 31, so that a slide lock between the battery 10 and the power tool or the battery charger can be released.

As shown in FIGS. 1 and 2, a pair of slide rails 25 are formed on the upper surface of the lid 14. The slide rails 25 are positioned on opposite sides in the right and left direction and extend in the forward and rearward direction in the parallel to each other. A positive electrode 43 and a negative electrode 44 are positioned at a central portion (with respect to the right and left direction) between the slide rails 25 on the upper surface of the lid 14. The positive and negative electrodes 43 and 44 can be electrically connected to corresponding plate-like terminals (not shown) of the power tool or the battery charger when the power tool or the battery charge is mechanically connected to the battery 10 (i.e., the lid 14). More specifically, the positive and negative electrodes 43 and 44 are disposed within the battery housing 11 such that their upper portions protrude upwardly from the upper surface of the lid 14 by a given distance so as to be exposed to the outside. Therefore, as the power tool or the battery charger moves to be slid on the battery 10 from the front side of the battery 10, the upper portions of the positive and negative electrodes 43 and 44 exposed to the outside may engage the corresponding plate-like terminals of the power tool of the battery charger so as to be electrically connected thereto. As shown in FIG. 5, a portion 43t of the positive electrode 43 and a portion 44t of the negative electrode 44 that are positioned within the battery housing 11 (positioned on the inner side or the backside of the lid 14) are electrically connected to the electric circuit board 40.

In addition, at the central portion of the upper surface of the lid 43, a first signal electrode 45 and a second signal electrode 46 are positioned on the left side of the positive electrode 43 and are arranged in line with each other in the forward and rearward direction. More specifically, the first and second signal electrodes 45 and 46 are disposed within the battery housing 11 such that their upper portions protrude upwardly from the upper surface of the lid 14 by a given distance so as to be exposed to the outside. Therefore, as the power tool or the battery charger moves to be slid on the battery 10 from the front side of the battery 10, the upper portions of the first and second signal electrodes 45 and 46 may receive corresponding signal terminals (not shown) of the power tool of the battery charger so as to be electrically connected thereto. As shown in FIG. 5, a portion 45t of the first signal electrode 45 and a portion 46t of the second signal electrode 46 that are positioned within the battery housing 11 (positioned on the inner side of the backside of the lid 14) are electrically connected to the electric circuit board 40.

Further, at the central portion of the upper surface of the lid 43, a connector 47 is positioned between the negative electrode 44 and the first and second signal electrodes 45 and 46. More specifically, the connector 47 is disposed within the battery housing 11 such that its upper portion protrudes upwardly from the upper surface of the lid 14 by a given distance so as to be exposed to the outside. Therefore, as the battery charger moves to be slid on the battery 10 from the front side of the battery 10, the upper portion of the connector 47 may be electrically connected to a corresponding connector (not shown) of the battery charger. As shown in FIG. 5, a conductor portion 47c of connector 47 that is positioned within the battery housing 11 (positioned on the inner side of the backside of the lid 14) is electrically connected to the electric circuit board 40.

Here, during a resin molding process of the lid 14, the connector 47, the positive electrode 43, the negative electrode 44, the first signal electrode 45 and the second signal electrode 46 (hereinafter called "battery terminals") are set within a mold that is used for molding the lid 14. With the battery terminals set within the mold, a resin is injected into the mold to form the lid 14, Therefore, the battery terminals are integrated with the lid 14 at the same time the lid 14 is molded. Thus, the battery terminals are integrated with the lid 14 by an insertion molding process. The positive and negative electrodes 43 and 44 may serves as discharge or charge terminals. The first and second signal electrodes 45 and 46 may serve as signal terminals.

As shown in FIGS. 1 and 2, a claw opening 28 is formed in the rear portion of the lid 14 at a position on the rear side of the slide rails 25. As viewed in a plan view, the claw opening 28 includes a straight portion extending in the right and left direction and a pair of leg portions extending in the forward direction from opposite ends of the straight portion. The lock claws 32 of the hook member 30 extend from within the battery housing 11 upwardly of the lid 14 through the claw opening 28. A rectangular notch-like opening 29 is formed in the rear portion of the lid 14 at a position on the rear side of the claw opening 28. The hook member 30 has an operation portion 34 that protrudes upwardly from the lid 14 through the opening 29.

As described previously, the electric circuit board 40 has the electric circuit for performing a discharge control and a charge control of the battery cells C. The electric circuit may include a microcomputer and any other electronic elements necessary for the control. In addition, the electric circuit board 40 can be connect to the battery terminals including the connector 47, the positive electrode 43, the negative electrode 44, the first signal electrode 45 and the second signal electrode 46. As described previously, the battery terminals are integrated with the lid 14. Therefore, the electric circuit board 40 is mounted to the inner surface (backside surface) of the lid 14 at a predetermined position that enables the electric circuit board 40 to be directly connected to the battery terminals. More specifically, as shown in FIG. 5, two bottomed threaded holes 14n are formed in the inner surface (backside surface) of the lid 14 at positions spaced from each other in the forward and rearward direction. Screws 16 are inserted into corresponding insertion holes (not shown) formed in the electric circuit board 40 and are engaged with the threaded holes 14n, so that the electric circuit board 40 is fixed in position relative to the inner surface of the lid 14.

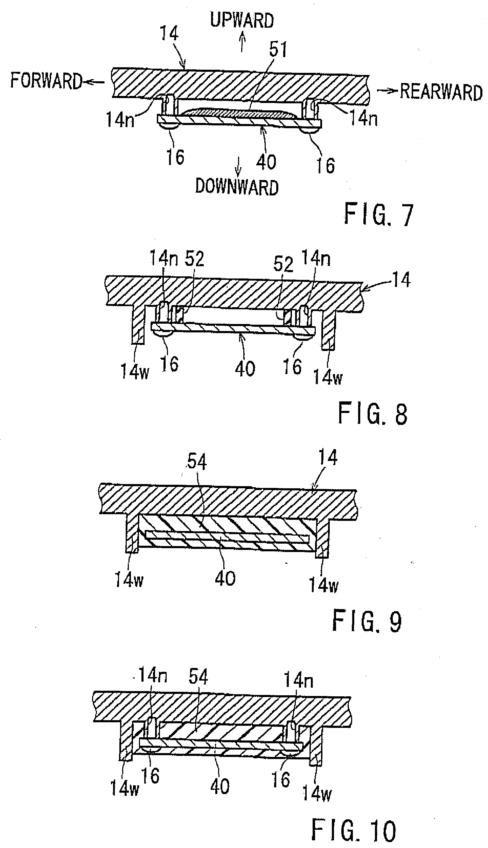

As shown in FIG. 7, a seal material 51 that may be an electrically insulating adhesive material is applied onto the upper surface of the electric circuit board 40 and is solidified thereon to cover a region where the microcomputer and any other electronic elements are mounted. The seal material 51 may be applied after the electric circuit board 40 has been electrically connected to the battery terminals.

According to the battery 10 of this example, the battery terminals including the connector 47, the positive electrode 43, the negative electrode 44, the first signal electrode 45 and the second signal electrode 46 are integrated with the lid 14 by an insertion molding technique. Therefore, even in the case that the battery terminals extend through the lid 14 from its outer side to the inner side (backside), no substantial clearance may be provided between the battery terminals and portions of the lid 14 through which the battery terminals extend. More specifically, each of the battery terminals closely contacts with an inner wall of each of holes of the lid 14 formed to receive the battery terminals. As a result, water may not flow through the holes of the lid 14 toward the inner side (backside) of the lid 14.

Further, because the battery terminals are integrated with the lid 14, no seal member is necessary provided between the battery terminals and portions of the lid 14 through which the battery terminals extend. Therefore, the waterproof property of the battery 10 can be improved without increase of the cost, which may be caused if seal members are provided.

Furthermore, the electric circuit board 40 is mounted to the inner surface (backside surface) of the lid 14 and is fixed at a position that enables the battery terminals to be directly connected to the electric circuit board 40. Therefore, there is no need of providing electric wires for connecting between the electric circuit board 40 and the battery terminals.

A second example will now be described with reference to FIG. 8. The second example is a modification of the first example and is different from the first example only in the mounting structure for mounting the electric circuit board 40 to the inner surface of the lid 14. Therefore, FIG. 8 shows only the mounting structure of the electric circuit board 40.

As shown in FIG. 8, a wall 14w extends vertically downward from the inner surface (backside surface) of the lid 14 and is configured to surround the electric circuit board 40 like a loop. The wall 14w has a vertical height to have a lower end positioned downwardly of the electric circuit board 40. In the state that.the electric circuit board 40 is positioned inside of the wall 14w, the electric circuit board 40 is fixed in position relative to the inner side (backside) of the lid 14 by means of the screws 16 that are engaged with the threaded holes 14n in the same manner as the first example.

Further, in the second example, a ring-shaped seal member 52 is provided between the upper surface of the electric circuit board 40 and the inner surface (backside surface) of the lid 14, so that the seal member 52 surrounds the microcomputer and any other electronic elements of the electric circuit board 40.

The wall 14w surrounding the electric circuit board 40 may prevent water from reaching to the electric circuit board 40 along the inner surface of the lid 14 even in the event that water enters to the inner side (backside) of the lid 14. In addition, because the seal member 52 surrounds the microcomputer and any other electronic elements of the electric circuit board 40, it is possible to further reliably prevent water from reaching to the electric elements of the electric circuit board 40.

A third example will now be described with reference to FIG. 9. Also, the third example is a modification of the first example, and is different from the first example only in the mounting structure for mounting the electric circuit board 40 to the backside surface of the lid 14. Therefore, FIG. 9 shows only the mounting structure of the electric circuit board 40.

In the third example, as in the second example, the wall 14w surrounds the electric circuit board 40 like a loop and extends vertically downward from the inner surface (backside surface) of the lid 14. In this example, the screws 16 for fixing the electric circuit board 40 in position relative to the inner side surface of the lid 14 are eliminated. Instead, a filing material 54 is filled into a space that is surrounded by the wall 14w, so that the entire electric circuit board 40 is embedded within the filling material 54. The filling material 54 may be an adhesive material having an electrical insulation property and a water-proof property.

Therefore, the electric circuit board 40 can be further reliably prevented from being wetted with water, and it is possible to further firmly fix the electric circuit board 40 in position relative to the inner surface (backside surface) of the lid 14 without need of screws 16 that fix the electric circuit board 40 to the inner surface of the lid 14.

A fourth example will now be described with reference to FIG. 10. This example is a modification of the third example and is different from the third example in that the electric circuit board 40 are mounted to the inner surface of the lid 14 by using the screws 16 in addition to the filling material 54. In this example, the screws 16 are also embedded within the filling material 54.

The above examples may be modified in various ways. For example, although the battery terminals are directly electrically connected to the electric circuit board 40 in the above examples, it may be possible to electrically connect the battery terminals to the electric circuit board 40 by using lead wires.

Further, although all of the battery terminals are integrated with the lid 14 by the insertion molding technique in the above examples, it may be possible to integrate only some of the battery terminals with the lid 14. For example, only the positive electrode 43 and the negative electrode 44 positioned on the outer side with respect to the widthwise direction may be integrated with the lid 14.

## Claims

1. A battery (10) comprising:
a battery housing (11) having a terminal mounting portion (14) made of resin; and
a plurality of battery terminals (43, 44, 45, 46, 47) connectible with external terminals and mounted to the terminal mounting portion (14) so as to extend through the terminal mounting portion (14), so that each of the battery terminals (43, 44, 45, 46, 47) has a first end positioned on the outer side of the battery housing (11) and a second end positioned on the inner side of the battery housing (11);
wherein at least one of the battery terminals (43, 44, 45, 46, 47) is integrated with the terminal mounting portion (14),
**characterized in that** the battery (10) further comprises an electric circuit board (40) mounted to an inner surface of the terminal mounting portion (14) at a predeteremined position that enables the electric circuit board (40) to be directly connected to the battery terminals (43, 44, 45, 46, 47).

2. The battery as in claim 1, wherein the at least one of the battery terminals (43, 44, 45, 46, 47) is integrated with the terminal mounting portion (14) by using an insertion molding technique.

3. The battery (10) as in claim 1 or 2, wherein:
the battery (10) is connectible with a power tool for serving as a power source for driving the power tool and is connectible with a battery charger for recharging the battery (10);
the battery housing (11) including the terminal mounting portion (14) is made of resin; and
the external terminals include terminals of the power tool or terminals of the battery charger.

4. The battery (10) as in any one of the preceding claims, wherein there is no substantial clearance between the at least one of the battery terminals (43, 44, 45, 46, 47) and a part of the terminal mounting portion (14), through which the at least one of the battery terminals (43, 44, 45, 46, 47) extends.

5. The battery (10) as in any one of the preceding claims, wherein the battery terminals include discharge or charge terminals (43, 44) and signal terminals (45, 46).

6. The battery (10) as in any one of the preceding claims, further comprising a seal member (52) provided between the electric circuit board (40) and the terminal mounting portion (14) and surrounding electronic components mounted to the electric circuit board (40).

7. The battery (10) as in any one of the preceding claims, further comprising a wall (14w) extending from the inner surface of the terminal mounting portion (14) and surrounding the electric circuit board (40).

8. The battery (10) as in claim 7, further comprising a filling material (54) having a waterproof property and filled into a space defined inside of the wall (14w), so that at least a part of the electric circuit board (40) is embedded within the filling material (54).

9. The battery (10) as in any one of the preceding claims, wherein the battery housing (11) includes a housing body (12) having an open side and a lid (14) mounted to the housing body (12) for closing the open side, and the lid (14) includes the terminal mounting portion.

10. A method of mounting at least one battery terminal to a terminal mounting portion (14) of a battery housing (11), comprising:
integrating the at least one battery terminal (43, 44, 45, 46, 47) with the terminal mounting portion (14) by using an insertion molding technique, so that the at least one battery terminal (43, 44, 45, 46, 47) extends through the terminal mounting portion (14), the at least one battery terminal (43, 44, 45, 46, 47) having a first end positioned outside of the battery housing (11) and a second end positioned inside of the battery housing (11), and
mounting an electric circuit board (40) to an inner surface of the terminal mounting portion (14) at a predetermined position that enables the electric circuit board (40) to be directly connected to the at least one battery terminal (43, 44, 45, 46, 47).

## Patentansprüche

1. Batterie (10), mit
einem Batteriegehäuse (11), das einen Anschlussmontageteil (14) aufweist, der aus Kunstharz hergestellt ist, und
einer Mehrzahl von Batterieanschlüssen (43, 44, 45, 46, 47), die mit externen Anschlüssen verbindbar sind und auf dem Anschlussmontageteil (14) montiert sind, so dass sie sich durch den Anschlussmontageteil (14) erstrecken, so dass jeder der Batterieanschlüsse (43, 44, 45, 46, 47) ein erstes Ende, das an der Außenseite des Batteriegehäuses (11) positioniert ist, und ein zweites Ende aufweist, das an der Innenseite des Batteriegehäuses (11) positioniert ist,
bei dem zumindest einer der Batterieanschlüsse (43, 44, 45, 46, 47) mit dem Anschlussmontageteil (14) integriert ist,
**dadurch gekennzeichnet, dass** die Batterie (10) weiter eine elektrische Schaltplatine (40) aufweist, die auf einer inneren Oberfläche des Anschlussmontageteils (14) in einer vorbestimmten Position montiert ist, die gewährleistet, dass die elektrische Schaltplatine (40) direkt mit den Batterieanschlüssen (43, 44, 45, 46, 47) verbunden ist.

2. Batterie nach Anspruch 1, bei der der zumindest einer der Batterieanschlüsse (43, 44, 45, 46, 47) mit dem Anschlussmontageteil (14) unter Verwendung einer Umspritztechnik integriert ist.

3. Batterie (10) nach Anspruch 1 oder 2, bei der
die Batterie (10) mit einem Kraftwerkzeug verbindbar ist, so dass sie als eine Leistungsquelle zum Antreiben des Kraftwerkzeugs dient, und mit einem Batterieladegerät zum Aufladen der Batterie (10) verbindbar ist,
das Batteriegehäuse (11), das den Anschlussmontageteil (14) enthält, aus Kunstharz hergestellt ist,
die externen Anschlüsse Anschlüsse des Kraftwerkzeugs oder Anschlüsse des Batterieladegeräts enthalten.

4. Batterie (10) nach einem der vorhergehenden Ansprüche, bei der kein wesentlicher Abstand zwischen dem zumindest einen der Batterieanschlüsse (43, 44, 45, 46, 47) und einem Teil des Anschlussmontageteils (14) vorliegt, durch welchen sich der zumindest eine der Batterieanschlüsse (43, 44, 45, 46, 47) erstreckt.

5. Batterie (10) nach einem der vorhergehenden Ansprüche, bei der die Batterieanschlüsse Entlade- oder Ladeanschlüsse (33, 44) und Signalanschlüsse (45, 46) enthalten.

6. Batterie (10) nach einem der vorhergehenden Ansprüche, die weiter ein Dichtungsbauteil (52) aufweist, das zwischen der elektrischen Schaltplatine (40) und dem Anschlussmontageteil (14) vorgesehen ist und elektrische Komponenten umgibt, die auf der elektrische Schaltplatine (40) montiert sind.

7. Batterie (10) nach einem der vorhergehenden Ansprüche, die weiter eine Wand (14w) aufweist, die sich von der inneren Oberfläche des Anschlussmontageteils (14) erstreckt und die elektrische Schaltplatine (40) umgibt.

8. Batterie (10) nach Anspruch 7, die weiter ein Füllmaterial (54) aufweist, das eine wasserundurchlässige Eigenschaft aufweist und in einen Raum gefüllt ist, der im Inneren der Wand (14w) definiert ist, so dass zumindest ein Teil der elektrischen Schaltplatine (40) innerhalb des Füllmaterials (54) eingebettet ist.

9. Batterie (10) nach einem der vorhergehenden Ansprüche, bei der das Batteriegehäuse (11) einen Gehäusekörper (12), der eine offene Seite aufweist, und einen Deckel (14) enthält, der an den Gehäusekörper (12) zum Schließen der offenen Seite montiert ist, und der Deckel (14) den Anschlussmontageteil enthält.

10. Verfahren zum Montieren von zumindest einem Batterieanschluss an einen Anschlussmontageteil (14) eines Batteriegehäuses (11), aufweisend:
Integrieren des zumindest einen Batterieanschlusses (43, 44, 45, 46, 47) mit dem Anschlussmontageteil (14) unter Verwendung einer Umspritztechnik, so dass sich der zumindest eine Batterieanschluss (43, 44, 45, 46, 47) durch den Anschlussmontageteil (14) erstreckt, und der zumindest eine Batterieanschluss (43, 44, 45, 46, 47) ein erstes Ende, das an der Außenseite des Batteriegehäuses (11) positioniert ist, und ein zweites Ende aufweist, das an der Innenseite des Batteriegehäuses (11) positioniert ist, und
Montieren einer elektrischen Schaltplatine (40) an eine innere Oberfläche des Anschlussmontageteils (14) in einer vorbestimmten Position, die es ermöglicht, dass die elektrische Schaltplatine (40) direkt mit dem zumindest einen Batterieanschluss (43, 44, 45, 46, 47) verbunden ist.

## Revendications

1. Batterie (10) comprenant :
un boîtier de batterie (11) ayant une portion de montage de bornes (14) réalisée en résine ; et
une pluralité de bornes de batterie (43, 44, 45, 46, 47) pouvant être connectées à des bornes externes et montées sur la portion de montage de bornes (14) de manière à s'étendre à travers la portion de montage de bornes (14), de manière que chacune des bornes de batterie (43, 44, 45, 46, 47) ait une première extrémité positionnée sur le côté extérieur du boîtier de batterie (11) et une deuxième extrémité positionnée sur le côté intérieur du boîtier de batterie (11) ;
dans laquelle au moins une des bornes de batterie (43, 44, 45, 46, 47) est intégrée avec la portion de montage de bornes (14),
**caractérisée en ce que** la batterie (10) comprend en outre une carte de circuit électrique (40) montée sur une surface intérieure de la portion de montage de bornes (14) dans une position prédéterminée qui permet à la carte de circuit électrique (40) d'être connectée directement aux bornés de batterie (43, 44, 45, 46, 47).

2. Batterie selon la revendication 1, dans laquelle l'au moins une des bornes de batterie (43, 44, 45, 46, 47) est intégrée avec la portion de montage de bornes (14) en utilisant une technique de moulage par insertion.

3. Batterie (10) selon la revendication 1 ou 2, dans laquelle
la batterie (10) peut être connectée à un outil électrique pour servir comme une source d'énergie pour entraîner l'outil électrique et peut être connectée avec un chargeur de batterie pour recharger la batterie (10) ;
le boîtier de batterie (11) comprenant la portion de montage de bornes (14) est réalisé en résine ; et
les bornes externes comprennent des bornes de l'outil électrique ou des bornes du chargeur de batterie.

4. Batterie (10) selon l'une quelconque des revendications précédentes, dans laquelle il n'existe aucun dégagement sensible entre l'au moins une des bornes de batterie (43, 44, 45, 46, 47) et une partie de la portion de montage de bornes (14), à travers laquelle l'au moins une des bornes de batterie (43, 44, 45, 46, 47) s'étend.

5. Batterie (10) selon l'une quelconque des revendications précédentes, dans laquelle les bornes de batterie comprennent des bornes de décharge ou de charge (43, 44) et des bornes de signal (45, 46).

6. Batterie (10) selon l'une quelconque des revendications précédentes, comprenant en outre un élément d'étanchéité (52) disposé entre la carte de circuit électrique (40) et la portion de montage de bornes (14) et entourant des composants électroniques montés sur la carte de circuit électrique (40).

7. Batterie (10) selon l'une quelconque des revendications précédentes, comprenant en outre une paroi (14w) s'étendant à partir de la surface intérieure de la portion de montage de bornes (14) et entourant la carte de circuit électrique (40).

8. Batterie (10) selon la revendication 7, comprenant en outre un matériau de remplissage (54) ayant une propriété d'imperméabilité et rempli dans un espace défini à l'intérieur de la paroi (14w), de manière qu'au moins une partie de la carte de circuit électrique (40) soit noyée dans le matériau de remplissage (54).

9. Batterie (10) selon l'une quelconque des revendications précédentes, dans laquelle le boîtier de batterie (11) comprend un corps de boîtier (12) ayant un côté ouvert et un couvercle (14) monté sur le corps de boîtier (12) pour fermer le côté ouvert, et le couvercle (14) comprend la portion de montage de bornes.

10. Procédé de montage d'au moins une borne de batterie sur une portion de montage de bornes (14) d'un boîtier de batterie (11), comprenant :
l'intégration de l'au moins une borne de batterie (43, 44, 45, 46, 47) avec la portion de montage de bornes (14) en utilisant une technique de moulage par insertion, de manière que l'au moins une borne de batterie (43, 44, 45, 46, 47) s'étende à travers la portion de montage de bornes (14), l'au moins une borne de batterie (43, 44, 45, 46, 47) ayant une première extrémité positionnée à l'extérieur du boîtier de batterie (11) et une deuxième extrémité positionnée à l'intérieur du boîtier de batterie (11) ; et
le montage d'une carte de circuit électrique (40) sur une surface intérieure de la portion de montage de bornes (14) dans une position prédéterminée qui permet à la carte de circuit électrique (40) d'être connectée directement à l'au moins une borne de batterie (43, 44, 45, 46, 47).
